# FASCICULE DE BREVET EUROPEEN

(11) **EP 4 118 306 B1**
(45) Date de publication et mention de la délivrance du brevet: **09.10.2024**
(21) Numéro de dépôt: 21714335.3
(22) Date de dépôt: 04.03.2021
(51) Int. Cl.: F02K 5/00, F01D 15/10, F01D 21/04, F01D 5/02, F01D 5/06

(54) **MODULE DE TURBOMACHINE EQUIPE D'UN ROTOR DE MACHINE ELECTRIQUE**
TURBOMASCHINENMODUL MIT EINEM ROTOR EINER ELEKTRISCHEN MASCHINE
TURBOMACHINE MODULE EQUIPPED WITH AN ELECTRIC MACHINE ROTOR

(30) Priorité: 10.03.2020 FR 2002367
(43) Date de publication de la demande: 18.01.2023
(73) Titulaire: SAFRAN AIRCRAFT ENGINES, 75015 Paris (FR)
(72) Inventeur: TRUCO, Romain, 77550 MOISSY-CRAMAYEL (FR); FIGEUREU, Claire Marie, 77550 MOISSY-CRAMAYEL (FR); LEVISSE, Paul Ghislain Albert, 77550 MOISSY-CRAMAYEL (FR); REIGNER, Pierre-Alain Jean Philippe, 77550 MOISSY-CRAMAYEL (FR); BRAULT, Michel Gilbert Roland, 77550 MOISSY-CRAMAYEL (FR)
(74) Mandataire: Gevers & Orès
(86) Numéro de dépôt international: PCT/FR2021/050369
(87) Numéro de publication internationale: WO 2021/181031

(56) Documents cités:
- EP-A1- 1 382 802
- EP-A2- 2 602 434
- EP-B1- 1 382 802
- WO-A1-2018/115763
- FR-A1- 2 393 227
- FR-A1- 2 976 623
- FR-A1- 3 081 523

## Description

### Domaine technique de l'invention

La présente invention concerne notamment un module de turbomachine d'aéronef équipé d'un rotor d'une machine électrique.

### Arrière-plan technique

L'état de l'art comprend notamment le document FR-A1-2 842 565 qui décrit une turbomachine équipée d'une machine électrique ainsi que les documents FR-A1-2 976 623 EP-A1-1 382 802, WO 2018/115763 A1, FR-A1-2 393 227, FR-A1-3 081 523 et EP-A2-2 602 434.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

En fonctionnement nominal, deux types d'efforts s'appliquent sur le rotor d'une machine électrique : un couple (résistif ou moteur selon les cas de fonctionnement), et un effort radial.

Le rotor de la machine électrique est fixé à un disque de la soufflante par l'intermédiaire d'une bride et de vis. Le disque peut ainsi entraîner en rotation le rotor de la machine électrique. Cette fixation permet également de garantir la bonne tenue du rotor de la machine électrique. En effet, les vis sont chargées en traction et assurent le maintien de la liaison par frottement entre les deux faces de la bride afin de reprendre l'effort radial et le couple de la machine électrique. Les vis sont alors dimensionnées par le rayon d'implantation de la bride et le coefficient de frottement au niveau de la bride. Lors d'un évènement extrême, par exemple une perte d'aube du disque de soufflante, le disque devient fortement déséquilibré et se met à orbiter sous l'effet d'un balourd conséquent. Ce déséquilibre peut provoquer un excentrement qui entraine à son tour la fermeture de l'entrefer de la machine électrique. L'excentrement lié à la perte d'aube étant grandement supérieur au jeu rotor-stator de la machine électrique, il y a alors contact rotor-stator de la machine électrique.

Ce contact rotor-stator de la machine électrique augmente légèrement l'effort radial magnétique, mais provoque surtout un effort purement mécanique significatif : un partie de l'effort de balourd transite par la machine électrique par l'intermédiaire de la bride et des vis, engendrant un effort radial à travers la bride, mais aussi un couple de frottement au niveau de la machine électrique entre le rotor et le stator. S'il se poursuit, ce frottement au niveau de la machine électrique et en particulier le contact entre les aimants du rotor électrique et les tôles magnétiques en acier du stator peut entraîner un feu moteur et/ou potentiellement un blocage du disque de soufflante.

La présente invention propose une solution à au moins une partie des problèmes évoqués dans ce qui précède.

### Résumé de l'invention

La présente invention propose un module de soufflante pour une turbomachine d'aéronef, comportant :
- une soufflante comportant un disque portant des aubes de soufflante,
- un rotor d'une machine électrique, ce rotor ayant une forme générale annulaire et étant monté coaxialement en aval de la soufflante,
- un support annulaire du rotor dont une extrémité aval est fixée audit rotor et dont une extrémité amont est fixée au disque de soufflante.

Selon l'invention, le support est fixé au disque par l'intermédiaire de vis fusibles qui sont configurées pour se rompre lorsqu'un couple de torsion transmis par le disque au support dépasse un seuil prédéterminé.

Grâce à l'invention, en cas d'incident majeur tel qu'une rupture d'aube, le déséquilibre du disque de soufflante et l'excentrement qui s'ensuit vont entraîner la rupture des vis fusibles.

Le rotor électrique ne sera donc plus entrainé en rotation par le disque de soufflante et deviendra une pièce stator fixé grâce à la force d'aimantation qui existe entre lui et son stator. En découplant le rotor de machine électrique du disque de soufflante, l'invention permet ainsi d'éviter notamment le risque de feu lié au contact rotor stator de la machine électrique en mouvement et en particulier le blocage du disque de soufflante.

La section des vis fusibles est étudiée pour assurer la tenue en fonctionnement nominal, et se rompre à partir d'un certain effort causé par le contact rotor-stator sur la machine électrique. Par exemple, en supposant qu'un quart de l'effort radial transite par la machine électrique, on peut dimensionner les vis fusibles pour rompre en cas de rupture d'aube tout en assurant la tenue sur les cas limites et nominaux de fonctionnement.

Le système selon l'invention peut comprendre une ou plusieurs des caractéristiques suivantes, prises isolément les unes des autres ou en combinaison les unes avec les autres :
- le support comprend une portion aval cylindrique de montage dudit rotor et une première bride annulaire amont de fixation audit disque, cette bride comportant des orifices de passage desdites vis fusibles ;
- la portion aval est reliée à la première bride par une paroi tronconique évasée vers l'aval ;
- la portion aval comprend une butée annulaire amont sur laquelle ledit rotor est destiné à prendre appui, et un filetage aval de fixation d'un écrou qui est configuré pour prendre appui sur le rotor pour le maintenir serré axialement contre cette butée ;
- la portion aval comprend un rebord annulaire radialement interne de retenue des vis fusibles après rupture ;
- ledit rebord comprend des orifices traversants de passage d'huile ;
- la soufflante comprend des plateformes inter-aubes qui sont fixées sur le disque, le module comportant en outre une virole annulaire de retenue des extrémités aval de ces plateformes, cette virole comportant une périphérie externe qui entoure et retient les extrémités aval des plateformes et une périphérie interne qui comprend une seconde bride annulaire de fixation au disque, cette seconde bride comportant des orifices de passage de vis de fixation ;
- le disque comprend à sa périphérie externe une série de dents qui définissent entre elles des alvéoles de montage de pieds desdites aubes, chacune de ces dents comportant à son extrémité aval une oreille de fixation de ladite virole, des orifices de passage des vis de fixation étant formés dans ces oreilles ;
- ladite seconde bride est intercalée entre le disque et ladite première bride, lesdites vis fusibles traversant les orifices de la première bride ainsi que des orifices de la seconde bride, et lesdites vis de fixation traversant les orifices de la seconde bride sans traverser des orifices de la première bride ;
- lesdites vis fusibles sont situées sur une première circonférence et lesdites vis de fixation sont situées sur une seconde circonférence, la première circonférence ayant un diamètre interne inférieur au diamètre de la seconde circonférence.

L'invention concerne aussi une turbomachine d'aéronef, comportant un module tel que décrit précédemment, cette turbomachine comportant un stator de la machine électrique, ce stator entourant le rotor de cette machine électrique dudit module.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en coupe axiale d'une turbomachine d'aéronef ;
[Fig.2] la figure 2 est une demi vue schématique partielle en coupe axiale d'une turbomachine d'aéronef équipée d'une machine électrique ;
[Fig.3] La figure 3 est une vue schématique en coupe axiale d'un rotor de machine électrique et de son support ;
[Fig.4] La figure 4 est une vue schématique partielle en coupe axiale de brides de fixations d'une virole et du rotor de la machine électrique à un disque de soufflante de la turbomachine ;
[Fig.5] La figure 5 est une vue schématique partielle en coupe axiale de la liaison entre un pied d'aube de soufflante et un virole de soufflante ;
[Fig.6] La figure 6 est une vue schématique en coupe axiale d'une vis fusible selon l'invention ;
[Fig.7] La figure 7 est une vue schématique en perspective du disque de soufflante ;
[Fig.8] La figure 8 est une vue schématique partielle en coupe radiale du disque de soufflante de la figure 7 ; et
[Fig.9] La figure 9 est une vue schématique en coupe axiale similaire à la figure 2 dans laquelle les vis fusibles sont rompues.

### Description détaillée de l'invention

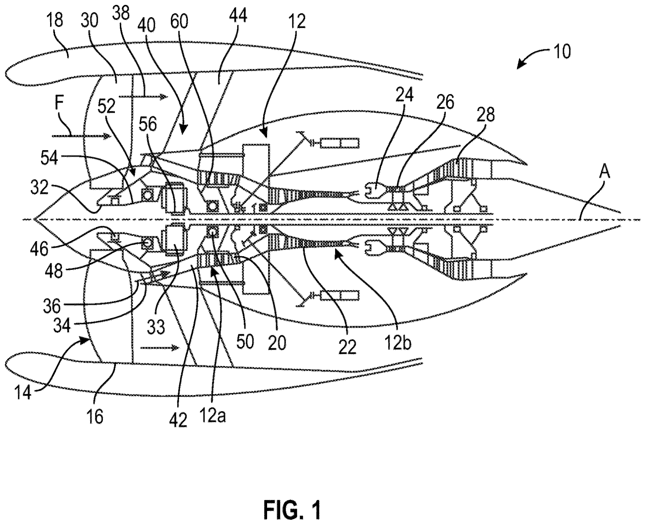

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De même, par convention dans la présente demande, les termes « interne » et « externe » sont définis radialement par rapport à l'axe longitudinal de la turbomachine, qui est notamment l'axe de rotation des rotors des compresseurs.

De l'amont vers l'aval, le générateur de gaz 12 comprend un compresseur basse pression 20, un compresseur haute pression 22, une chambre de combustion 24, une turbine haute pression 26 et une turbine basse pression 28.

La soufflante 14 comprend une rangée annulaire d'aubes 30 entraînée en rotation par un arbre de soufflante 32 qui est relié au rotor du corps basse pression 12a notamment par l'intermédiaire d'un réducteur 33. Cependant, selon une variante de réalisation de l'invention non illustrée, la turbomachine pourrait ne pas comprendre de réducteur.

Le flux de gaz qui traverse la soufflante (flèche F) est séparé à l'amont du générateur de gaz 12 par un bec annulaire 34 en un flux annulaire radialement interne, appelé flux primaire 36 qui alimente le générateur de gaz 12, et en un flux annulaire radialement externe, appelé flux secondaire 38 qui s'écoule entre le générateur de gaz 12 et la nacelle 18 et fournit la majeure partie de la poussée de la turbomachine.

Un carter d'entrée 40 relie structurellement le générateur de gaz 12 au carter de soufflante 16 et à la nacelle 18. Le carter d'entrée 40 comprend une rangée annulaire de bras 42 radialement internes s'étendant dans le flux primaire 36, et une rangée annulaire d'aubes redresseurs 44 (du type OGV pour « *Outlet Guide Vane* » en anglais) radialement externes s'étendant dans le flux secondaire 38. Les bras 42 sont en général en nombre limités (moins de dix) et peuvent être tubulaires et traversés par des servitudes. Le nombre d'aubes 44 (OGV) est en général supérieur à dix.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire centré sur l'axe A, une couronne s'étendant autour de l'axe et des satellites qui engrènent avec le solaire et la couronne et sont portés par un porte-satellites. La couronne est fixe et reliée fixement à un support des paliers 46, 48. Le porte-satellites est tournant et relié à un arbre de sortie 54 du réducteur qui comprend en outre un arbre d'entrée 56 engrené avec le solaire. L'arbre d'entrée 56 du réducteur est accouplé à l'arbre principal du corps basse pression, et l'arbre de sortie 54 est accouplé avec l'arbre de soufflante 32.

L'arbre d'entrée du réducteur est guidé par le palier 50 qui est porté par un support de palier 60. L'arbre de sortie 54 est guidé par les paliers 46, 48. Les supports de paliers 52, 60 s'étendent autour de l'axe A et sont des pièces fixes reliées au carter d'entrée 40.

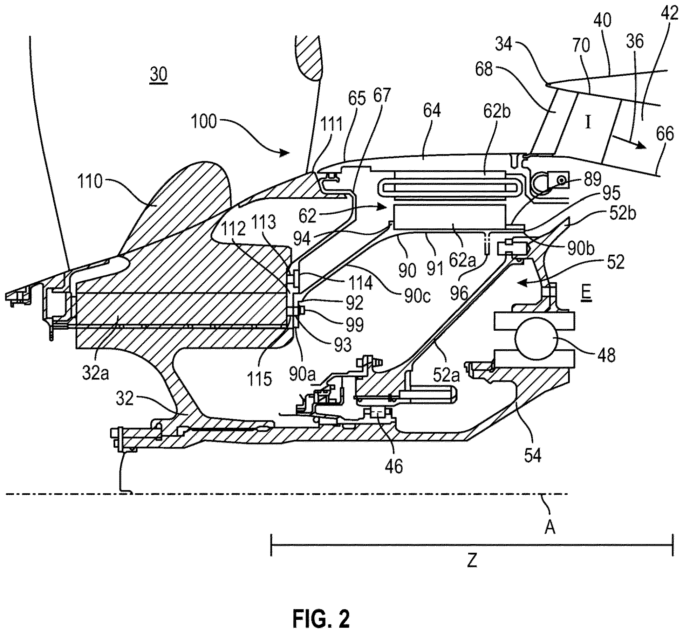

La figure 2 est une vue à plus grande échelle d'une partie de la figure 1, et en particulier de la zone Z située entre le disque de soufflante 32a et le réducteur (non représenté sur la figure 2), dans laquelle une machine électrique 62 est installée. Elle permet d'illustrer un module 100 selon l'invention comprenant la soufflante et un rotor 62a de la machine électrique 62.

En plus d'être délimitée axialement, à l'amont, par le disque de soufflante 32a, et à l'aval, par le réducteur, cette zone Z de forme annulaire est délimitée radialement à l'intérieur par l'arbre de sortie 54 du réducteur et radialement à l'extérieur par les éléments qui délimitent intérieurement la veine I d'écoulement du flux primaire 36. Ces éléments comprennent d'une part une virole annulaire 64 située à l'amont et une paroi annulaire 66 interne située à l'aval et qui fait partie du carter d'entrée 40 car elle est reliée aux extrémités radialement internes des bras 42.

La paroi 66 s'étend dans le prolongement de la virole 64 qui est une virole interne et qui est reliée par une rangée annulaire d'aubes fixes 68 à une virole externe 70. Les viroles 64, 70 définissent entre elles l'entrée d'air de la veine I d'écoulement du flux primaire 36. La virole 70 s'étend entre le bec 34 précité et une paroi annulaire externe située à l'aval de la virole 70 et qui fait partie du carter d'entrée 40 car elle est reliée aux extrémités radialement externes des bras 42.

La zone annulaire Z est partagée en deux portions annulaires, respectivement amont et aval, par le support de paliers 52. Dans l'exemple représenté, ce support a une forme générale tronconique évasée vers l'aval. Son extrémité amont et radialement interne porte la bague externe du palier 46 dont la bague interne est fixée sur l'arbre de sortie 54. L'extrémité aval et radialement externe du support 52 est fixée au carter d'entrée 40.

La bague externe du ou de chaque palier 48 est fixée au support 52, sensiblement en son milieu, la ou chaque bague interne étant fixée à l'arbre de sortie 54. Pour cela, le support de paliers 52 comprend deux tronçons annulaires, respectivement amont 52a, et aval 52b. Le tronçon amont 52a s'étend depuis le palier 46 jusqu'à une bride annulaire radialement externe de fixation au tronçon aval 52b, et le tronçon aval 52b s'étend depuis une bride annulaire radialement interne de fixation au tronçon amont 52a jusqu'à une bride annulaire radialement externe de fixation au carter d'entrée 40.

La ou chaque bague externe du palier 48 est fixée au tronçon aval 52b.

La portion aval de la zone Z représente une partie d'une enceinte E de lubrification des paliers 46, 48 (et 50 - figure 1) ainsi que du réducteur qui est logé dans cette enceinte, en étant disposé axialement entre les paliers 46, 48, d'une part, et le palier 50, d'autre part. Un brouillard d'huile règne dans cette enceinte.

La portion amont de la zone Z représente le lieu d'installation de la machine électrique 62, qui est donc isolée de l'enceinte E par le support de paliers 52. La machine 62 a une forme générale annulaire et comprend le rotor 62a et un stator 62b. Le rotor 62a a une forme générale annulaire s'étendant autour de l'axe A et est monté coaxialement en aval de la soufflante 14. Le rotor 62a pourrait également être monté en amont de la soufflante 14 mais il bénéficie d'un plus grand rayon d'implantation en aval de la soufflante 14.

Le rotor 62a est porté par un support annulaire 90 qui a une forme générale cylindrique. Le rotor 62a est disposé autour de ce support annulaire 90.

Une extrémité aval 90b du support annulaire 90 est fixée au rotor 62a et une extrémité amont 90a de ce même support est fixée au disque 32a de soufflante.

Le support 90 permet ainsi au disque de soufflante 32a d'entraîner en rotation le rotor 62a. Le stator 62b a également une forme générale cylindrique et est intégré en contact de la virole 64.

La virole 64 coopère à étanchéité avec le support de paliers 52 (coopération non illustrée). L'étanchéité est assurée par un joint à labyrinthe dont les léchettes annulaires sont par exemple portées par la virole 64 et le revêtement abradable est porté par le support de paliers 52.

Le stator 62b est par exemple relié par un câble électrique à un circuit de commande, ce câble passant ici à travers le bras tubulaire 42 du carter d'entrée 40.

La machine électrique 62 et en particulier son stator 62b est situé au plus près du flux principal après traversée de la soufflante 14 et/ou du flux primaire 36, c'est-à-dire au plus près de la virole 64.

La virole 64 retient également des extrémités aval 111 de plateformes 110 inter-aubes qui sont fixées sur le disque 32a. Cette virole 64 comporte une périphérie externe 65 qui entoure et retient les extrémités aval 111 des plateformes 110 et une périphérie interne 67 qui comprend une seconde bride annulaire 112 de fixation au disque 32a située au niveau d'une extrémité interne de la seconde bride 112. La seconde bride 112 comporte des orifices de passage 113 de vis de fixation 114.

Selon l'invention, le support 90 est fixé au disque 32a par l'intermédiaire de vis fusibles 99 qui sont configurées pour se rompre lorsqu'un couple de torsion transmis par le disque 32a au support 90 dépasse un seuil prédéterminé.

Le support 90 comprend une portion aval 91 cylindrique de montage du rotor 62a et une première bride annulaire amont 92 de fixation au disque 32a, cette bride 92 comportant des orifices 93 de passage des vis fusibles 99.

La portion aval 91 est reliée à la première bride 92 par une paroi tronconique 90c évasée vers l'aval.

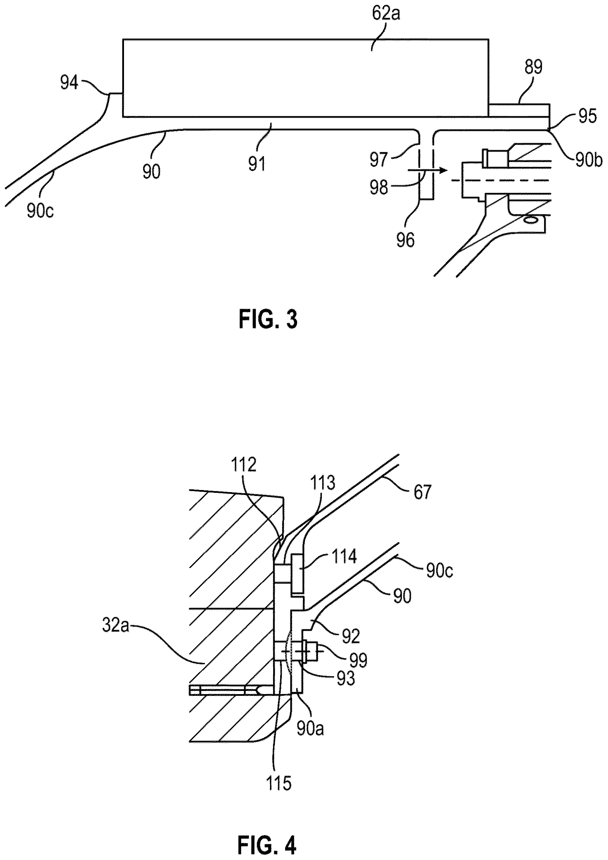

Comme mieux visible sur la figure 3, la portion aval 91 comprend une butée annulaire amont 94 sur laquelle le rotor 62a est destiné à prendre appui, et un filetage aval 95 de fixation d'un écrou 89 qui est configuré pour prendre appui sur le rotor 62a pour le maintenir serré axialement contre cette butée 94.

La portion aval 91 comprend un rebord annulaire 96 radialement interne de retenue des vis fusibles 99 après rupture. En effet, dans une situation dans laquelle le rotor 62a est découplé du disque de soufflant, le rotor 62a devient stator, et les vis fusibles 99 rompues s'accumulent alors sur une face interne de la portion aval 91 et sont retenues par le rebord annulaire 96.

Ce rebord annulaire 96 permet d'équilibrer le rotor 62a. L'équilibrage du rotor 62a peut en effet être réalisé en usinant localement le rebord annulaire 96 en fonction d'un balourd constaté, afin de corriger ce dernier. Ce rebord annulaire 96 contribue également à la raideur de la portion aval 91 et donc à un maintien du jeu de l'entrefer entre le rotor 62a et le stator 62b de la machine électrique 62.

Le rebord annulaire 96 comprend des orifices traversants 97 de passage d'huile permettant la libération de l'huile dans la direction de la flèche 98 en cas de fuite d'huile dans cette zone.

Comme illustrée à la figure 4, la seconde bride 112 est intercalée entre le disque 32a et la première bride 92. Les vis fusibles 99 traversent les orifices 93 de la première bride 92 ainsi que des orifices 115 de la seconde bride 112. Les vis de fixation 114 traversent quant à elles les orifices 113 de la seconde bride 112 sans traverser des orifices de la première bride 92.

Les vis fusibles 99 sont situées sur une première circonférence et les vis de fixation 113 sont situées sur une seconde circonférence, la première circonférence ayant un diamètre interne inférieur au diamètre de la seconde circonférence. La seconde bride 112 est donc séparée du rotor de la machine électrique pour permettre à cette dernière de se découpler sans libérer le disque de soufflante de la seconde bride 112.

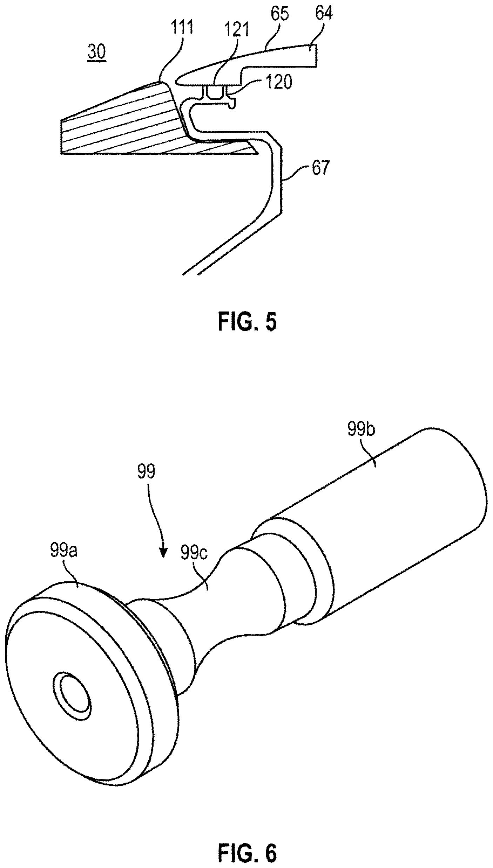

Comme illustrée à la figure 5, l'extrémité externe de la périphérie interne 67 comprend des léchettes annulaires 120 destinées à coopérer avec un revêtement abradable 121 de la périphérie externe 65 de la virole 64. Les léchettes 120 et le revêtement 121 forment un joint d'étanchéité du type à labyrinthe.

Sur la figure 6, est illustré un exemple de vis fusible 99 selon l'invention. Une telle vis 99 comprend une tête de vis 99a et un filetage 99b. Le caractère fusible de la vis 99 se manifeste par sa portion intermédiaire 99c de section réduite, disposée entre la tête 99a et le filetage 99b de manière à servir d'amorce de rupture, notamment en cisaillement.

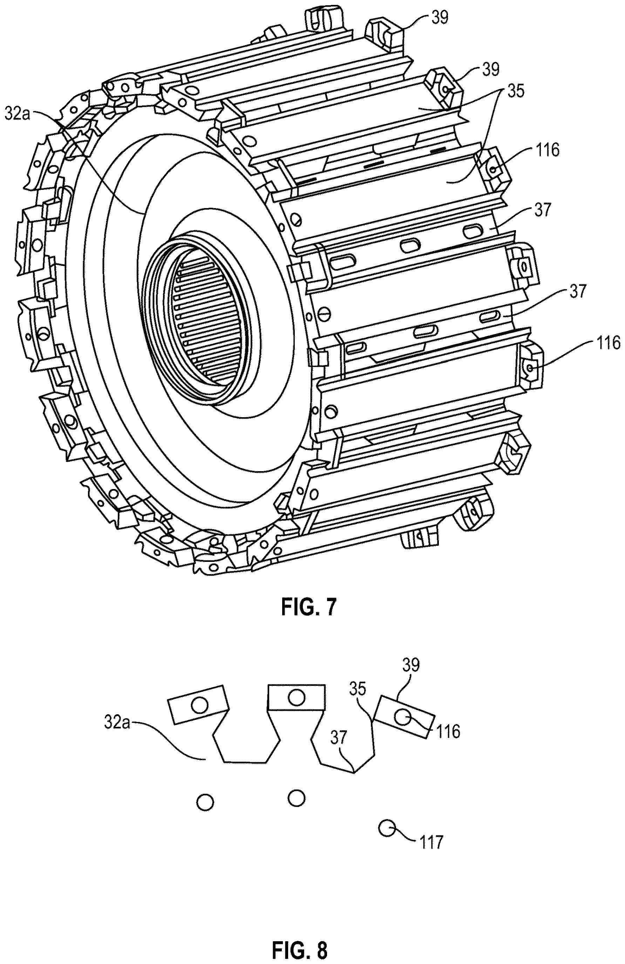

Le serrage de la vis est réalisé ici par une clé à six pans creux. D'autres modes de serrage peuvent-être également adoptés. Comme visible sur les figures 7 et 8, le disque 32a comprend à sa périphérie externe une série de dents 35 qui définissent entre elles des alvéoles 37 de montage de pieds des aubes, chacune de ces dents 35 comportant à son extrémité aval une oreille 39 de fixation de la virole.

Des orifices de passage 116 des vis de fixation sont formés dans ces oreilles 39 et sont destinés à se trouver en regard des orifices de passage 113 des vis de fixation de la seconde bride 112. Des orifices de passage 117 des vis fusibles sont formés dans le disque 32a, situés radialement intérieurement par rapport aux orifices 116 et sont destinés à se trouver en regard des orifices de passage 93 des vis fusibles de la première bride 92 et des orifices 115 de la seconde bride 112.

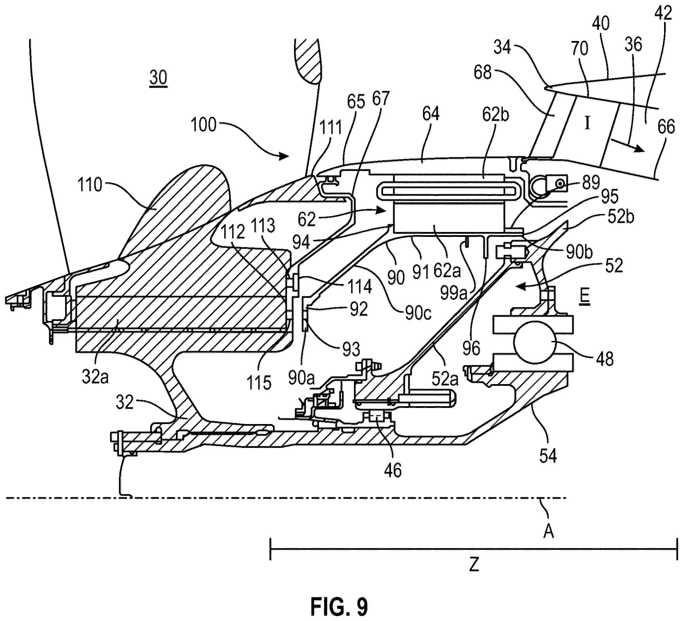

La figure 9 est similaire à la figure 2 et illustre un exemple dans lequel les vis fusibles 99 ont cédées, par exemple suite à une perte d'aube, libérant ainsi le rotor 62a du disque 32a de soufflante. En effet, une telle de perte d'aube va créer un balourd important sur le disque de soufflante 32a qui va à son tour entraîner un effort radial du disque de soufflante 32a sur la première bride 92. Les vis fusibles sont alors dimensionnées pour rompre en cisaillement sous l'effet du couple de frottement du rotor sur le stator de la machine électrique transmis par le disque 32a et de l'effort radial du disque de soufflante sur la première bride 92.

On remarque ici que le rotor 62a est au contact du stator 62b et est devenu lui-même stator. Les débris 99a des vis fusibles rompues peuvent alors s'accumuler contre une face interne de la portion aval 91 du support 90 et en particulier contre le rebord annulaire 96.

Cette figure 9 permet également d'illustrer le fait que le disque 32a de soufflante reste relié à la périphérie interne 67 de la virole 64 par l'intermédiaire de la seconde bride 122.

## Revendications

1. Module (100) de soufflante pour une turbomachine (10) d'aéronef, comportant :
- une soufflante (14) comportant un disque (32a) portant des aubes (30) de soufflante,
- un rotor (62a) d'une machine électrique (62), ce rotor (62a) ayant une forme générale annulaire et étant monté coaxialement en aval de la soufflante (14),
- un support annulaire (90) du rotor (62a) dont une extrémité aval (90b) est fixée audit rotor (62a) et dont une extrémité amont (90a) est fixée au disque (32a) de soufflante,
**caractérisé en ce que** le support (90) est fixé au disque (32a) par l'intermédiaire de vis fusibles (99) qui sont configurées pour se rompre lorsqu'un couple de torsion transmis par le disque (32a) au support (90) dépasse un seuil prédéterminé.

2. Module (100) selon la revendication précédente, dans lequel le support (90) comprend une portion aval (91) cylindrique de montage dudit rotor (62a) et une première bride annulaire amont (92) de fixation audit disque (32a), cette bride (92) comportant des orifices (93) de passage desdites vis fusibles (99).

3. Module (100) selon la revendication précédente, dans lequel la portion aval (91) est reliée à la première bride (92) par une paroi tronconique (90c) évasée vers l'aval.

4. Module (100) selon la revendication 2 ou 3, dans lequel la portion aval (91) comprend une butée annulaire amont (94) sur laquelle ledit rotor (62a) est destiné à prendre appui, et un filetage aval (95) de fixation d'un écrou (89) qui est configuré pour prendre appui sur le rotor (62a) pour le maintenir serré axialement contre cette butée (94).

5. Module (100) selon l'une des revendications 2 à 4, dans lequel la portion aval (91) comprend un rebord annulaire (96) radialement interne de retenue des vis fusibles (99) après rupture.

6. Module (100) selon la revendication précédente, dans lequel ledit rebord (96) comprend des orifices traversants (97) de passage d'huile.

7. Module (100) selon l'une des revendications 2 à 6, dans lequel la soufflante (14) comprend des plateformes (110) inter-aubes qui sont fixées sur le disque (32a), le module comportant en outre une virole annulaire (64) de retenue des extrémités aval (111) de ces plateformes (110), cette virole (64) comportant une périphérie externe (65) qui entoure et retient les extrémités aval (111) des plateformes (110) et une périphérie interne (67) qui comprend une seconde bride annulaire (112) de fixation au disque (32a), cette seconde bride (112) comportant des orifices de passage (113) de vis de fixation (114).

8. Module (100) selon la revendication précédente, dans lequel le disque (32a) comprend à sa périphérie externe une série de dents (35) qui définissent entre elles des alvéoles (37) de montage de pieds desdites aubes (30), chacune de ces dents (35) comportant à son extrémité aval une oreille (39) de fixation de ladite virole (64), des orifices de passage (116) des vis de fixation (114) étant formés dans ces oreilles (39).

9. Module (100) selon la revendication 7 ou 8, en dépendance de l'une des revendications 2 à 6, dans lequel ladite seconde bride (112) est intercalée entre le disque (32a) et ladite première bride (92), lesdites vis fusibles (99) traversant les orifices (93) de la première bride (92) ainsi que des orifices (115) de la seconde bride (112), et lesdites vis de fixation (114) traversant les orifices (113) de la seconde bride (112) sans traverser des orifices de la première bride (92).

10. Module (100) selon la revendication précédente, dans lequel lesdites vis fusibles (99) sont situées sur une première circonférence et lesdites vis de fixation (114) sont situées sur une seconde circonférence, la première circonférence ayant un diamètre interne inférieur au diamètre de la seconde circonférence.

11. Turbomachine (10) d'aéronef, comportant un module (100) selon l'une des revendications précédentes, cette turbomachine (10) comportant un stator (62b) de la machine électrique (62), ce stator (62b) entourant le rotor (62a) de cette machine électrique (62) dudit module (100).

## Patentansprüche

1. Gebläsemodul (100) für ein Turbotriebwerk (10) eines Luftfahrzeugs, umfassend:
- ein Gebläse (14), das eine Scheibe (32a) umfasst, die Gebläseschaufeln (30) trägt,
- einen Rotor (62a) einer elektrischen Maschine (62), wobei dieser Rotor (62a) eine allgemein ringförmige Form aufweist und koaxial stromabwärts des Gebläses (14) angebracht ist,
- einen ringförmigen Träger (90) des Rotors (62a), von dem ein stromabwärtiges Ende (90b) am Rotor (62a) befestigt ist und ein stromaufwärtiges Ende (90a) an der Gebläsescheibe (32a) befestigt ist,
**dadurch gekennzeichnet, dass** der Träger (90) an der Scheibe (32a) mittels Schmelzsicherungsschrauben (99) befestigt ist, die so konfiguriert sind, dass sie brechen, wenn ein von der Scheibe (32a) auf den Träger (90) übertragenes Torsionsmoment eine vorbestimmte Schwelle überschreitet.

2. Modul (100) nach dem vorstehenden Anspruch, wobei der Träger (90) einen stromabwärtigen zylindrischen Abschnitt (91) zur Anbringung des Rotors (62a) und einen ersten stromaufwärtigen ringförmigen Flansch (92) zur Befestigung an der Scheibe (32a) umfasst, wobei dieser Flansch (92) Öffnungen (93) für den Durchtritt der Schmelzsicherungsschrauben (99) umfasst.

3. Modul (100) nach dem vorstehenden Anspruch, wobei der stromabwärtige Abschnitt (91) über eine kegelstumpfförmige Wand (90c), die sich zur stromabwärtigen Seite hin aufweitet, mit dem ersten Flansch (92) verbunden ist.

4. Modul (100) nach Anspruch 2 oder 3, wobei der stromabwärtige Abschnitt (91) einen stromaufwärtigen ringförmigen Anschlag (94), an dem der Rotor (62a) bestimmungsgemäß in Anlage geht, und ein stromabwärtiges Gewinde (95) zur Befestigung einer Mutter (89) umfasst, die so konfiguriert ist, dass sie am Rotor (62a) in Anlage geht, um ihn axial an diesem Anschlag (94) verspannt zu halten.

5. Modul (100) nach einem der Ansprüche 2 bis 4, wobei der stromabwärtige Abschnitt (91) einen radial inneren ringförmigen Rand (96) zum Zurückhalten der Schmelzsicherungsschrauben (99) nach dem Bruch umfasst.

6. Modul (100) nach dem vorstehenden Anspruch, wobei der Rand (96) Durchgangsöffnungen (97) für den Durchtritt von Öl umfasst.

7. Modul (100) nach einem der Ansprüche 2 bis 6, wobei das Gebläse (14) Plattformen (110) zwischen den Schaufeln umfasst, die an der Scheibe (32a) befestigt sind, wobei das Modul weiter einen ringförmigen Mantel (64) zum Zurückhalten der stromabwärtigen Enden (111) dieser Plattformen (110) umfasst, wobei dieser Mantel (64) einen äußeren Umfang (65), der die stromabwärtigen Enden (111) der Plattformen (110) umgibt und zurückhält, und einen inneren Umfang (67) umfasst, der einen zweiten ringförmigen Flansch (112) zur Befestigung an der Scheibe (32a) umfasst, wobei dieser zweite Flansch (112) Durchtrittsöffnungen (113) für Befestigungsschrauben (114) umfasst.

8. Modul (100) nach dem vorstehenden Anspruch, wobei die Scheibe (32a) an ihrem äußeren Umfang eine Reihe von Zähnen (35) umfasst, die zwischen sich Waben (37) zur Anbringung von Füßen der Schaufeln (30) definieren, wobei jeder dieser Zähne (35) an seinem stromabwärtigen Ende ein Ohr (39) zur Befestigung des Mantels (64) umfasst, wobei in diesen Ohren (39) Durchtrittsöffnungen (116) für die Befestigungsschrauben (114) gebildet sind.

9. Modul (100) nach Anspruch 7 oder 8, in Abhängigkeit von einem der Ansprüche 2 bis 6, wobei der zweite Flansch (112) zwischen der Scheibe (32a) und dem ersten Flansch (92) eingefügt ist, wobei die Schmelzsicherungsschrauben (99) durch die Öffnungen (93) des ersten Flansches (92) sowie durch Öffnungen (115) des zweiten Flansches (112) hindurchgehen und die Befestigungsschrauben (114) durch die Öffnungen (113) des zweiten Flansches (112) hindurchgehen, ohne durch Öffnungen des ersten Flansches (92) hindurchzugehen.

10. Modul (100) nach dem vorstehenden Anspruch, wobei sich die Schmelzsicherungsschrauben (99) auf einem ersten Umkreis befinden und die Befestigungsschrauben (114) sich auf einem zweiten Umkreis befinden, wobei der erste Umkreis einen Innendurchmesser aufweist, der kleiner ist als der Durchmesser des zweiten Umkreises.

11. Turbotriebwerk (10) für ein Luftfahrzeug, das ein Modul (100) nach einem der vorstehenden Ansprüche umfasst, wobei dieses Turbotriebwerk (10) einen Stator (62b) der elektrischen Maschine (62) umfasst, wobei dieser Stator (62b) den Rotor (62a) dieser elektrischen Maschine (62) des Moduls (100) umgibt.

## Claims

1. A fan module (100) for an aircraft turbomachine (10), comprising:
- a fan (14) comprising a disc (32a) carrying fan vanes (30),
- a rotor (62a) of an electric machine (62), this rotor (62a) being generally annular in shape and being mounted coaxially downstream of the fan (14),
- an annular support (90) for the rotor (62a), a downstream end (90b) of which is attached to said rotor (62a) and an upstream end (90a) of which is attached to the fan disc (32a),
**characterised in that** the support (90) is attached to the disc (32a) by means of fusible screws (99) which are configured to break when a torsional torque transmitted from the disc (32a) to the support (90) exceeds a predetermined threshold.

2. The module (100) according to the preceding claim, wherein the support (90) comprises a downstream cylindrical segment (91) for mounting said rotor (62a) and a first upstream annular flange (92) for attaching said disc (32a), this flange (92) comprising orifices (93) for the passage of said fusible screws (99).

3. The module (100) according to the preceding claim, wherein the downstream segment (91) is connected to the first flange (92) by a frustoconical wall (90c) flared downstream.

4. The module (100) according to claim 2 or 3, wherein the downstream segment (91) comprises an upstream annular stop (94) on which said rotor (62a) is intended to bear, and a downstream thread (95) for attaching a nut (89) which is configured to bear on the rotor (62a) to keep it tightened axially against this stop (94).

5. The module (100) according to any of claims 2 to 4, wherein the downstream segment (91) comprises a radially internal annular rim (96) for retaining the fusible screws (99) after breakage.

6. The module (100) according to the preceding claim, wherein said rim (96) comprises through orifices (97) for oil passage.

7. The module (100) according to any of claims 2 to 6, wherein the fan (14) comprises inter-vane platforms (110) which are attached to the disc (32a), the module further comprising an annular ferrule (64) for retaining the downstream ends (111) of these platforms (110), this ferrule (64) comprising an external periphery (65) which surrounds and retains the downstream ends (111) of the platforms (110) and an internal periphery (67) which comprises a second annular flange (112) for attaching to the disc (32a), this second flange (112) comprising orifices (113) for the passage of attaching screws (114).

8. The module (100) according to the preceding claim, wherein the disc (32a) comprises at its external periphery a series of teeth (35) which define between them alveoli (37) for mounting the roots of said vanes (30), each of these teeth (35) comprising at its downstream end an ear (39) for attaching said ferrule (64), orifices (116) for the passage of the attaching screws (114) being formed in these ears (39).

9. The module (100) according to claim 7 or 8, in dependence on one of claims 2 to 6, wherein said second flange (112) is interposed between the disc (32a) and said first flange (92), said fusible screws (99) passing through the orifices (93) in the first flange (92) as well as orifices (115) in the second flange (112), and said attaching screws (114) passing through the orifices (113) in the second flange (112) without passing through orifices in the first flange (92).

10. The module (100) according to the preceding claim, wherein said fusible screws (99) are located on a first circumference and said attaching screws (114) are located on a second circumference, the first circumference having an internal diameter smaller than the diameter of the second circumference.

11. An aircraft turbomachine (10), comprising a module (100) according to one of the preceding claims, this turbomachine (10) comprising a stator (62b) of the electric machine (62), this stator (62b) surrounding the rotor (62a) of this electric machine (62) of said module (100).
